(19) Europäisches Patentamt
European Patent Office
Office européen des brevets

(11) **EP 4 576 760 B1**

(12) **FASCICULE DE BREVET EUROPEEN**

(45) Date de publication et mention
de la délivrance du brevet:
**08.07.2026 Bulletin 2026/28**

(21) Numéro de dépôt: **24219454.6**

(22) Date de dépôt: **12.12.2024**

(51) Classification Internationale des Brevets (IPC):
***H04N 7/14*** *(2006.01)*

(52) Classification Coopérative des Brevets (CPC):
**H04N 7/147**

(54) **MÉTHODE DE TRAITEMENT D'IMAGES POUR VISIOCONFÉRENCE, DISPOSITIF DE VISIOCONFÉRENCE**

BILDVERARBEITUNGSVERFAHREN FÜR VIDEOKONFERENZEN, VIDEOKONFERENZVORRICHTUNG

IMAGE PROCESSING METHOD FOR VIDEO CONFERENCE, AND VIDEO CONFERENCE DEVICE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.12.2023 FR 2314755**

(43) Date de publication de la demande:
**25.06.2025 Bulletin 2025/26**

(73) Titulaire: **SAGEMCOM BROADBAND SAS**
**92270 Bois-Colombes (FR)**

(72) Inventeurs:
• **BERGER, Jérôme**
**92270 Bois-Colombes (FR)**
• **OBEID, Jad Abdul Rahman**
**92270 Bois-Colombes (FR)**

(74) Mandataire: **Novagraaf Technologies**
**2 rue Sarah Bernhardt**
**CS90017**
**92665 Asnières-sur-Seine Cedex (FR)**

(56) Documents cités:
WO-A1-2015/051335    WO-A1-2022/147455
WO-A1-98/28706      CN-B- 111 556 278
US-A1- 2023 045 989   US-B1- 11 671 561
US-B2- 11 812 185

## Description

### DOMAINE TECHNIQUE

Les différents exemples de réalisation décrits dans la présente divulgation concernent une méthode et un dispositif de communication par vidéo. La méthode et le dispositif peuvent être utilisés par exemple dans le cadre d'une application d'appel vidéo ou de visioconférence. Une telle méthode peut être utilisée dans de nombreux appareils, par exemple dans un décodeur de télévision, ou dans un téléphone mobile ou dans un ordinateur.

### ARRIERE PLAN

Les systèmes d'appel vidéo ou de visioconférence ont trouvé de nombreuses applications, tant dans le domaine professionnel que le domaine privé, ou à l'intersection des domaines professionnels et privés, notamment dans le contexte du télétravail. La frontière entre la sphère privée et l'environnement professionnel est ainsi devenue perméable. Ainsi, un appel vidéo peut être considéré comme une intrusion, du fait des informations qu'il procure sur l'environnement physique, familial ou professionnel des interlocuteurs. Diverses solutions ont été proposées, notamment la possibilité de flouter le fond de l'image, ou encore d'y superposer un fond virtuel. Cependant, de telles solutions ne sont pas adaptées à des situations où des personnes font une irruption intempestive dans le plan de l'image.

Il existe un besoin pour une méthode de traitement d'images pour visioconférence qui permette de gérer efficacement ce type de situations.

### RESUME

Un premier aspect de la présente divulgation concerne une méthode de traitement d'images pour vidéoconférence, telle que définie dans la revendication 1.

Un second aspect de la présente divulgation concerne un dispositif de visioconférence tel que défini dans les revendications 12 et 13.

Un troisième aspect de la présente divulgation concerne un produit programme d'ordinateur tel que défini dans la revendication 14.

Un quatrième aspect de la présente divulgation concerne un support de stockage non volatile tel que défini dans la revendication 15.

### BREVE DESCRIPTION DES FIGURES

Les exemples de réalisation seront mieux compris à la lumière de la description détaillée qui va suivre et des dessins qui l'accompagnent, lesquels sont donnés à titre d'illustration uniquement et ne sont donc pas limitatifs de la présente divulgation.

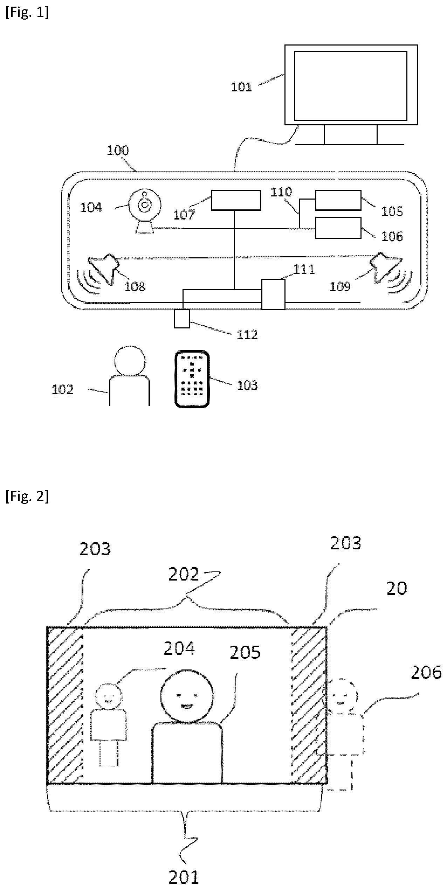

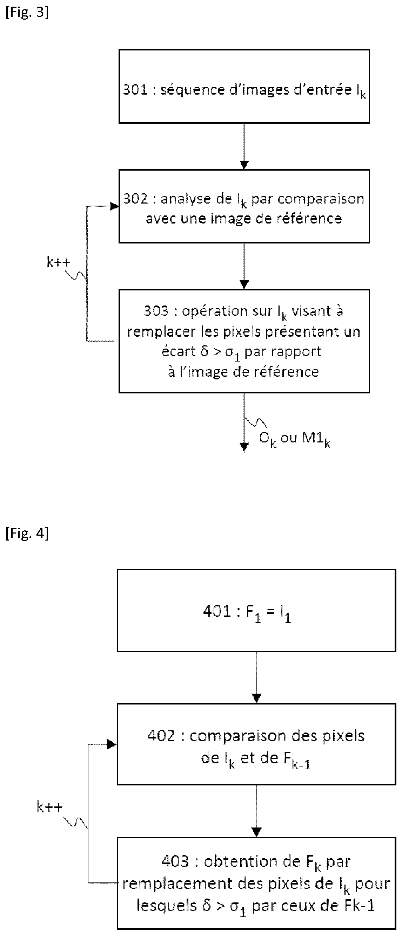

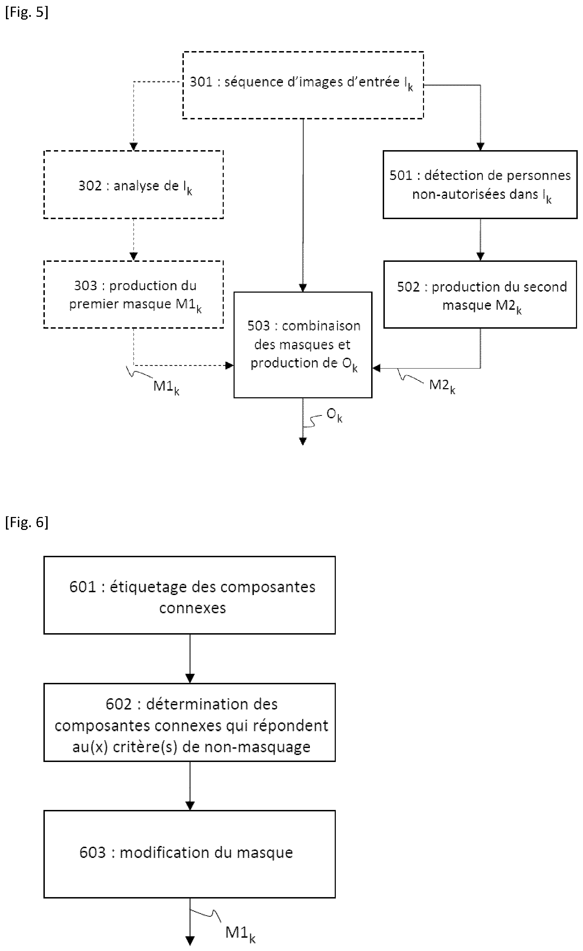

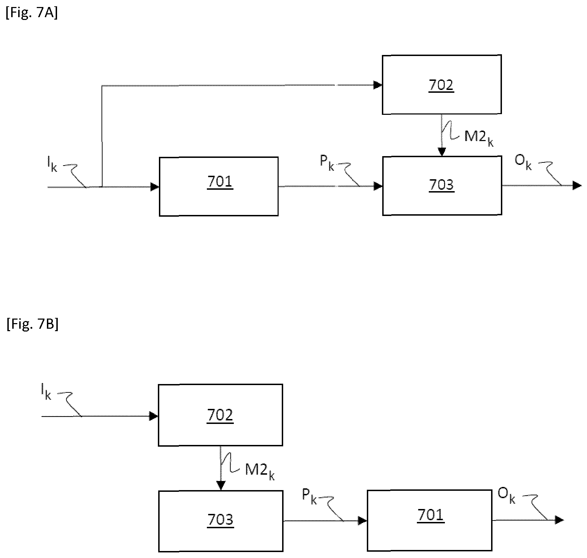

La figure FIG.1 est un diagramme schématique d'un exemple de système de visioconférence illustrant un ou plusieurs modes de réalisation.
La figure FIG.2 est une représentation schématique d'une image 20 correspondant à un champ de vue 201 visible dans une session de visioconférence.
La figure FIG.3 est un organigramme d'une méthode de traitement d'images selon un ou plusieurs exemples de réalisation.
La figure FIG.4 est un organigramme détaillant un exemple de réalisation d'une étape d'analyse de la méthode de traitement d'images décrite en regard de la FIG.3.
La figure FIG.5 est un organigramme d'un exemple de réalisation d'une méthode de traitement d'images telle que décrite ici, avec détection des personnes non autorisées.
La figure FIG.6 est un organigramme détaillant un exemple de filtrage par région qui peut être utilisé dans un mode de réalisation de la méthode de traitement d'images tel que décrit en regard de la FIG.5.
Les figures FIG.7A et 7B sont des organigrammes correspondant à deux alternatives de réalisation dans lesquelles le traitement relatif à la zone de bordure d'image est découplé du traitement relatif à la détection des personnes non-autorisées.

### DESCRIPTION DETAILLEE

Divers exemples de réalisation vont maintenant être décrits plus en détail, à titre non limitatif, en référence aux dessins qui accompagnent la présente divulgation et qui illustrent certains exemples de réalisation.

Les détails structurels et fonctionnels spécifiques décrits ici constituent des exemples non limitatifs. Les exemples de réalisation décrits ici peuvent faire l'objet de diverses modifications et formes alternatives. L'objet de la divulgation peut être réalisé sous de nombreuses formes différentes et ne doit pas être interprété comme étant limité aux seules réalisations présentées ici à titre d'exemples illustratifs. Il convient de comprendre qu'il n'y a aucune intention de limiter les modes de réalisation aux formes particulières décrites dans la suite de ce document.

Dans la description qui va suivre, des éléments identiques, similaires ou analogues seront désignés par les mêmes chiffres de référence. Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en œuvre en parallèle. Les blocs ou phases de procédé peuvent être implémentés à l'aide de circuits, de logiciels ou d'une combinaison de circuits et de logiciels, et ce de façon centralisée, ou de façon distribuée, pour tout ou partie des blocs ou phases. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en œuvre à l'aide de plus ou de moins de composants ou de phases, ou encore avec d'autres composants ou à travers d'autres phases. Tout système de traitement de données adapté peut être utilisé pour l'implémentation. Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en œuvre tout ou partie des fonctionnalités des blocs et/ou des phases des procédés ou méthodes selon les exemples de réalisation. Le code logiciel peut être stocké dans une mémoire non volatile ou sur un support de stockage non volatile (clé USB, carte mémoire ou autre support) lisible directement ou à travers une interface adaptée par le processeur ou contrôleur.

La figure 1 est un diagramme schématique d'un système illustrant un ou plusieurs modes de réalisation de façon non-limitative. Le système de la figure 1 comprend un dispositif 100 et un écran d'affichage 101. Le dispositif 100 comprend un processeur 105, une mémoire non volatile 106 comportant du code logiciel, et une mémoire de travail 107. Les diverses composantes du dispositif 100 sont contrôlées par le processeur 105, par exemple via un bus interne 110.

Le dispositif 100 peut comporter par ailleurs une interface (non illustrée) par laquelle il est relié à l'écran 101. Cette interface est par exemple une interface HDMI. Le dispositif 100 est adapté à générer un signal vidéo pour affichage sur l'écran 101. La génération du signal vidéo est par exemple réalisée par le processeur 105. Le dispositif 100 comporte par ailleurs une interface 111 pour le relier à un réseau de communication, par exemple le réseau internet.

Le dispositif 100 comporte par ailleurs une caméra 104 et un microphone 112. Le code logiciel comporte une application de communication par vidéo (appel vidéo, visioconférence etc...) mettant en œuvre la caméra et le microphone.

Le dispositif 100 peut optionnellement être contrôlé par un utilisateur 102 par exemple à l'aide d'une interface utilisateur, montrée ici sous la forme d'une télécommande 103. Le dispositif 100 peut optionnellement comporter une source audio, illustrée par deux haut-parleurs 108 et 109. Le dispositif peut optionnellement comporter une unité matérielle d'accélération neuronale ('NPU', pour 'neuronal processing unit' en langue anglaise) dont la fonction est d'accélérer les calculs nécessaires pour un réseau de neurones.

Dans certains contextes, le dispositif 100 est par exemple un récepteur / décodeur de télévision numérique, tandis que l'écran d'affichage est un téléviseur.

La mémoire non volatile 106 comprend notamment des instructions de programme d'ordinateur qui lorsqu'elles sont exécutées par le processeur 105 causent la mise en oeuvre de la méthode de traitement d'images objet de la présente divulgation.

Le système de la figure 1 est donné à titre illustratif pour la clarté de l'exposé. Les implémentations pratiques peuvent comporter plus ou moins de composantes. Par ailleurs, certaines composantes décrites comme intégrées au dispositif 100 peuvent être externes à ce dispositif et reliées à lui par l'intermédiaire d'une interface adaptée - ceci est notamment le cas pour la caméra 104 ou encore le microphone 112. A contrario, certaines composantes du système décrites comme externes au dispositif 100 peuvent être intégrées dans le dispositif - par exemple l'écran d'affichage ou encore l'interface utilisateur 103.

La FIG.2 est une représentation schématique d'une image 20 correspondant à un champ de vue 201 visible dans une session de visioconférence. Cette image comporte une zone centrale 202 et une zone de bordure d'image 203, constituée dans cet exemple de deux bandes situées à droite et à gauche du cadre 201. Par exemple les bandes de la zone de bordure d'image représentent chacune 10% de la taille de l'image 20. Alternativement la zone de bordure peut aussi inclure deux bandes en haut et en bas non représentées sur la figure en plus des deux bandes à droite et à gauche. Dans l'exemple de la FIG.2, deux personnes 204 et 205 se situent dans la zone centrale 202, et une personne 206 entre dans le champ de vue 201 par la droite. La personne 206 est donc partiellement visible dans la bande droite de la zone de bordure d'image 203.

La FIG.3 est un organigramme d'une méthode selon un ou plusieurs exemples de réalisation. En 301, une séquence d'images d'entrée est obtenue, soit directement de la caméra 104, soit indirectement après que des traitements ont été réalisés sur les images capturées par la caméra 104. En 302, chaque image d'entrée de la séquence d'images d'entrée est analysée afin d'identifier des objets entrants visibles en bordure d'image. Ces objets peuvent être des personnes ou d'autres éléments qui entrent dans le champ de vue 201. L'analyse effectuée en 302 comporte une comparaison, sur la zone de bordure d'image 203, des pixels de chaque image de la séquence d'images d'entrée avec les mêmes pixels d'une image de référence obtenue à partir d'une ou plusieurs images d'entrée précédentes de la séquence d'images d'entrée. Une opération est ensuite réalisée, en 303, qui vise à masquer les pixels situés dans la zone de bordure d'image de l'image d'entrée lorsque lesdits pi-

xels présent, par rapport aux mêmes pixels de l'image de référence, un écart $\delta$ supérieur à un premier seuil $\sigma_1$. Plusieurs modes de réalisation de cette opération seront décrits par la suite. Selon le mode de réalisation considéré, le résultat de l'opération réalisée en 303 est soit une image de sortie dans laquelle on a masqué les pixels situés en bordure d'image pour lesquels l'écart $\delta$ était supérieur au premier seuil $\sigma_1$, soit un masque destiné à être utilisé pour transformer l'image d'entrée afin de masquer lesdits pixels. Dans les deux cas, le résultat ultime est l'obtention d'une image de sortie dans laquelle les objets entrants, visibles au moins partiellement dans la zone de bordure d'image, sont masqués.

En d'autres termes, la comparaison de l'étape 302 se fait sur la zone de bordure d'image à l'exclusion de la zone centrale.

De façon classique, la comparaison des pixels peut se faire en évaluant un écart entre tout ou partie de l'ensemble de valeurs de deux pixels de même position. Par exemple, et sans que cela soit limitatif, une méthode classique pour comparer des pixels est de calculer une distance euclidienne dans l'espace défini par les ensembles considérés (par exemple la luminance, ou les canaux de couleur, ou les deux). L'écart ainsi obtenu peut ensuite être comparé à un seuil.

Ainsi, la méthode décrite permet de masquer les objets qui entrent dans le champ de vue 201 dès la première image sur laquelle ces objets commencent à apparaître, même lorsque l'objet ne figure que partiellement dans le champ de vue 201 (objet tronqué) et ne peut donc pas être détecté par des moyens de détection d'objets. Par exemple, la méthode décrite permet de masquer les pixels correspondant à la personne 206 dans la bordure d'image 203.

La FIG.4 illustre un exemple de réalisation de l'étape d'analyse 302. En 401, la première image $I_1$ de la séquence d'images d'entrée est mémorisée comme première image de référence $F_1$. Ensuite, en 402, pour chaque image $I_k$ (k>1) de la séquence d'images d'entrée, la comparaison est effectuée entre les pixels de la zone de bordure d'image 203 de l'image d'entrée $I_k$, et les mêmes pixels dans l'image de référence $F_{k-1}$. En 403, une image de référence suivante $F_k$ est obtenue. Cette image de référence suivante $F_k$ est destinée à être utilisée pour la comparaison avec l'image d'entrée suivante $I_{k+1}$ de la séquence d'images d'entrée. Elle est obtenue en remplaçant, dans la zone de bordure d'image 203 de l'image $I_k$, les pixels présentant un écart $\delta$ supérieur audit premier seuil $\sigma_1$ par rapport aux mêmes pixels de l'image de référence $F_{k-1}$, par les mêmes pixels de l'image de référence $F_{k-1}$. L'analyse reprend ensuite en 402 avec l'image d'entrée suivante $I_{k+1}$ et l'image de référence suivante $F_k$.

L'opération décrite en 303 peut être réalisée entre les étapes 402 et 403, ou en parallèle de l'étape 403, ou à la suite de l'étape 403. Alternativement, l'opération décrite en 402 et 403 peut ne pas être réalisée, et l'image de sortie précédente $O_{k-1}$ peut être utilisée comme image de référence courante $F_k$.

Dans un premier mode de réalisation, non couvert par l'invention, l'opération effectuée en 303 comporte un remplacement des pixels de la zone de bordure d'image de l'image d'entrée pour lesquels l'écart $\delta$ est supérieur au premier seuil $\sigma1$ par un même pixel d'une image de remplacement $R_k$. Par exemple l'image de remplacement $R_k$ peut être l'image de référence courante $F_{k-1}$ ou une image fixe. Optionnellement, l'opération effectuée en 303 comporte, en plus de ce remplacement, un mélange entre le pixel de la zone de bordure d'image de l'image d'entrée $I_k$ et le même pixel de l'image de remplacement $R_k$, lorsque l'écart $\delta$ est compris entre le premier seuil $\sigma_1$ et un second seuil $\sigma_2$ inférieur au premier seuil. Par exemple l'opération effectuée en 303 délivre une image de sortie $O_k$ à partir de l'image d'entrée $I_k$ et de l'image de remplacement $R_k$ avec $O_k = \alpha R_k + (1 - \alpha)I_k$.

Le terme $\alpha$ est un coefficient de transparence : plus il est élevé, plus la transparence appliquée à l'image de remplacement $R_k$ est importante. Lorsque $\alpha = 0$, une opacité maximum est appliquée à l'image de remplacement $R_k$, c'est-à-dire que le pixel dans l'image de sortie $O_k$ est identique au pixel dans l'image d'entrée $I_k$. Lorsque $\alpha = 1$, une transparence maximum est appliquée à l'image de remplacement $R_k$, c'est-à-dire que le pixel de l'image d'entrée $I_k$ est remplacé par le pixel de l'image de remplacement $R_k$ dans l'image de sortie $O_k$. Et lorsque $0 < \alpha < 1$ un mélange est réalisé entre le pixel de l'image d'entrée $I_k$ et celui de l'image de remplacement $R_k$.

Dans un second mode de réalisation, correspondant à l'invention, l'opération effectuée en 303 comporte une production d'un premier masque. Le premier masque $M1_k$ est créé en affectant un coefficient de transparence $\alpha$ à chaque pixel dudit masque. Le coefficient de transparence des pixels situés dans la zone centrale 202 est fixé de façon à obtenir une opacité maximum. Le coefficient de transparence des pixels situés dans la zone de bordure d'image 203 est fonction de l'écart $\delta$ entre le pixel de l'image d'entrée $I_k$ et celui de l'image de référence $F_{k-1}$.

Dans un premier exemple de réalisation du premier masque $M1_k$, les pixels pour lesquels l'écart est supérieur au premier seuil $\sigma1$ se voient affecter une valeur 1 (transparence maximum du masque) et les pixels pour lesquels l'écart est inférieur ou égal au premier seuil $\sigma1$ se voient affecter une valeur 0 (opacité maximum du masque). Les pixels du masque ainsi obtenus ont une valeur binaire (0 ou 1). De façon optionnelle, un filtrage passe-bas est appliqué au masque binaire pour obtenir un premier masque non-binaire $M1_k$.

Optionnellement, un filtre morphologique est aussi appliqué, par exemple un filtre appliquant une petite ouverture (de rayon 1 ou 2 par exemple) pour supprimer les pixels isolés, suivie d'une dilatation (de rayon 2 à 10 par exemple) pour faire en sorte que le masque couvre bien les objets à masquer. Optionnellement, un filtre médian est appliqué, seul ou en combinaison avec le filtre morphologique, pour réduire le bruit.

Dans un second exemple de réalisation, le premier masque $M1_k$ est obtenu en affectant directement des valeurs non-binaires aux pixels du masque. Ainsi, les pixels pour lesquels l'écart est supérieur au premier seuil $\sigma_1$ se voient affecter une valeur 1 (transparence maximum du masque) ; les pixels pour lesquels l'écart est inférieur au second seuil $\sigma_2$ se voient affecter une valeur 0 (opacité maximum du masque), et les pixels pour lesquels l'écart $\delta$ est compris entre lesdits premier et second seuils $\sigma_1$ et $\sigma_2$ se voient affecter un coefficient de transparence $\alpha$, avec par exemple $\alpha = \dfrac{\delta - \sigma_2}{\sigma_1 - \sigma_2}$ (transparence partielle). Optionnellement, un filtre morphologique et/ou un filtre médian tels que décrits plus haut peuvent aussi être appliqués au masque non-binaire ainsi obtenu. Ce mode de réalisation est particulièrement bien adapté au cas où l'image de remplacement provient de l'image de référence.

De façon avantageuse, la méthode de traitement d'images comporte, outre l'analyse 302 et l'opération 303, une détection dans les images d'entrée de personnes non-autorisées dans un champ de vue de la visioconférence, c'est-à-dire des personnes à masquer (les personnes autorisées ne devant pas être masquées). Cette détection peut se faire en parallèle ou à la suite de l'analyse 302 et de l'opération 303. Elle peut par exemple être réalisée en utilisant une base de données des personnes autorisées et/ou non autorisées qui comporte pour chaque personne un vecteur descriptif, par exemple un vecteur décrivant le visage de la personne. Dans l'image d'entrée $I_k$, les visages peuvent être détectés et une représentation vectorielle peut être extraite par exemple en utilisant une solution à base de réseau de neurones. Cette représentation vectorielle peut alors être comparée avec le contenu de la base de données pour déterminer si la personne est ou non autorisée. Une fois détectées, les personnes non-autorisées peuvent être masquées.

Dans le mode de réalisation de la figure FIG.5, en 501, les personnes non-autorisées sont détectées dans l'image $I_k$. Dans cet exemple, la détection se fait en parallèle de l'analyse 302 et de l'opération 303. L'opération 303 produit un premier masque $M1_k$ tel qu'il a été décrit plus haut. En 502, un second masque $M2_k$ est produit à partir du résultat de la détection, en affectant un coefficient de transparence maximum aux pixels qui correspondent aux personnes non autorisées. En 503, le premier et le second masque sont combinés et le résultat de cette combinaison est appliqué à l'image de remplacement $R_k$ qui sert à transformer l'image d'entrée $I_k$ en une image de sortie $O_k$. L'image de sortie $O_k$ est prête pour transmission à un ou plusieurs destinataires. La transmission peut être précédée d'autres traitements de l'image et/ou des images précédentes et suivantes, comme la compression, l'ajout d'éléments dans l'image etc...

Par exemple la combinaison des premier et second masques $M1_k$ et $M2_k$ consiste à produire un troisième masque $M3_k$. Dans le cas où les premier et second masques sont binaires, le troisième masque est transparent là où au moins le premier ou le second masque sont transparents, et il est opaque là où le premier et le second masques sont opaques. Dans le cas où les premier et second masques sont non-binaires, le troisième masque est par exemple le maximum des premier et second masque, ou dans un autre exemple, $M3_k = 1 - (1 - M1_k) \cdot (1 - M2_k)$.

Dans ce mode de réalisation, il est possible que des personnes non-autorisées apparaissent dans la zone de bordure d'image et soient détectées lors de l'étape de détection 501. Ces personnes seront supprimées en appliquant le second masque $M2_k$. Il est donc redondant de les traiter aussi par l'intermédiaire du premier masque $M1_k$. Un traitement via le premier masque $M1_k$ risquerait par ailleurs d'introduire des artéfacts (par exemple un objet masqué dans la zone de bordure d'image 203 mais apparent dans la zone centrale 202 parce que cet objet n'est pas une personne non-autorisée). Avantageusement, l'opération 303 comporte un filtrage, dit filtrage par région, qui modifie le premier masque $M1_k$ pour éviter de masquer certains objets dans la zone de bordure d'images 203. Par exemple, le filtre par région permet de rendre visible les objets de grande taille et/ou les objets qui s'étendent dans la zone centrale 202 et/ou les objets qui ne touchent pas le bord de l'image d'entrée.

Le filtre par région est décrit plus en détails en regard de la figure FIG.6. En 601, le filtre par région applique un étiquetage en composantes connexes du premier masque selon un procédé connu dans la littérature, par exemple du document « Analyse d'images : filtrage et segmentation » J.-P. Cocquerez et S. Philipp, éd. Masson (1995) pages 61-63. Cette étape identifie des composantes connexes correspondant chacune à un objet, et affecte à chaque pixel du premier masque un identifiant de la composante connexe à laquelle le pixel appartient. En 602, le filtre par région identifie les composantes connexes qui ne devraient pas être masquées selon au moins un des critères suivants : si le nombre de pixels affectés à la composante connexe est supérieur à un seuil fixé (par exemple 200 pixels), si la taille d'une boîte englobante de la composante connexe est supérieure à un seuil fixé (par exemple si la largeur et la hauteur sont toutes deux plus grandes que 32), si la composante connexe ne touche pas le bord de l'image, si la composante connexe touche la zone centrale 202 de l'image. Ensuite, en 603, le filtre par région affecte la valeur 0 (opaque) aux pixels des composantes connexes identifiées à l'étape 602 afin de produire le premier masque $M1_k$ qui est ensuite combiné avec le second masque $M2_k$.

Les figures FIG.7A et FIG.7B représentent deux alternatives de réalisation dans lesquelles le traitement relatif à la zone de bordure d'image est découplé du traitement relatif à la détection des personnes non-autorisées. Dans la première alternative, décrite sur la FIG.7A, le traitement relatif à la zone de bordure d'image (représenté par le bloc 701) est effectué en amont du traitement relatif à la détection des personnes non-autorisées (représenté par le bloc 702). Dans ce cas, l'image d'entrée $I_k$ est modifiée en 701 pour produire une image intermédiaire $P_k$. Cette image intermédiaire $P_k$ est ensuite modifiée une seconde fois en 703 à partir de l'image de remplacement $R_k$ à laquelle on applique le second masque $M2_k$ obtenu en 702. On obtient alors l'image de sortie $O_k$. Dans la seconde alternative, décrite sur la FIG.7B, le traitement relatif à la zone de bordure d'image (représenté par le bloc 701) est effectué en aval du traitement relatif à la détection des personnes non-autorisées (représenté par le bloc 702). Dans ce cas, le second masque $M2_k$ est obtenu en 702 à partir de l'image d'entrée $I_k$. En 703, on obtient une image intermédiaire $P_k$ à partir de l'image de remplacement $R_k$ à laquelle on applique le masque $M2_k$ obtenu en 702. Puis l'image intermédiaire $P_k$ est appliquée au bloc 701 qui effectue le traitement de bordure d'image et délivre l'image de sortie $O_k$. Dans ces deux exemples de réalisation, il est possible d'utiliser un premier masque $M1_k$ pour effectuer le traitement de bordure d'image. Mais cela n'est pas nécessaire : les images peuvent être modifiées directement.

Dans un autre mode de réalisation, lorsqu'une personne non-autorisée est détectée, la caméra est coupée, ou une image fixe est affichée. Dans ce cas, avantageusement le traitement de bordure d'image est interrompu pour ne reprendre que lorsque plus aucune personne non autorisée ne figure dans le champ de vue de la visioconférence.

Les personnes du métier comprendront que tous les schémas fonctionnels présentés ici représentent des vues conceptuelles, données à titre d'exemple, de circuits incorporant les principes de la divulgation.

Chaque fonction, bloc, étape décrit peut être mis en œuvre dans du matériel, des logiciels, des microprogrammes, des intergiciels, des microcodes ou toute combinaison appropriée de ceux-ci. S'ils sont mis en œuvre dans un logiciel, les fonctions ou blocs des schémas fonctionnels et des organigrammes peuvent être mis en œuvre par des instructions de programme d'ordinateur/codes de logiciel, qui peuvent être stockés ou transmis sur un support lisible par ordinateur, ou chargés sur un ordinateur à usage général, un ordinateur à usage spécial ou un autre appareil de traitement programmable et/ou un système, de sorte que les instructions de programme d'ordinateur ou les codes de logiciel qui s'exécutent sur l'ordinateur ou un autre appareil de traitement programmable, créent les moyens de mettre en œuvre les fonctions décrites dans la présente description.

Bien que les aspects de la présente divulgation aient été décrits en référence à des réalisations particulières, il convient de comprendre que ces réalisations ne font qu'illustrer les principes et les applications de la présente divulgation. Il est donc entendu que de nombreuses modifications peuvent être apportées aux modes de réalisation illustratifs et que d'autres arrangements peuvent être conçus sans s'écarter de la portée de la divulgation tels que déterminés sur la base des revendications.

Les avantages et les solutions aux problèmes ont été décrits ci-dessus en ce qui concerne des modes de réalisation spécifiques de l'invention. Cependant, les avantages, les bénéfices, les solutions aux problèmes, et tout élément qui peut causer ou résulter en de tels avantages, bénéfices ou solutions, ou causer de tels avantages, bénéfices ou solutions à devenir plus prononcés ne doivent pas être interprétés comme une caractéristique ou un élément critique, requis, ou essentiel de l'une ou de l'ensemble des revendications.

## Revendications

1. Méthode de traitement d'images pour visioconférence comportant une étape d'analyse d'une séquence d'images d'entrée obtenue à partir d'une caméra, les images d'entrée étant composées d'une pluralité de pixels et comportant une zone de bordure d'image et une zone centrale, **caractérisée en ce que** l'étape d'analyse comporte :

- une comparaison, sur la zone de bordure d'image à l'exclusion de la zone centrale, des pixels de chaque image de la séquence d'images d'entrée avec les mêmes pixels d'une image de référence, l'image de référence utilisée pour la comparaison avec une image d'entrée courante étant obtenue à partir d'une ou plusieurs images d'entrée précédentes de la séquence d'images d'entrée, et
- une opération visant à masquer les pixels situés dans la zone de bordure d'image de l'image d'entrée lorsque lesdits pixels présentent, par rapport aux mêmes pixels de l'image de référence, un écart $\delta$ supérieur à un premier seuil $\sigma_1$ ;

ladite opération comportant une production d'un premier masque destiné à être appliqué à une image de remplacement utilisée pour transformer l'image d'entrée en une image de sortie, ledit premier masque affectant un coefficient de transparence $\alpha$ à chaque pixel, le coefficient de transparence des pixels situés dans la zone de bordure d'image étant fonction de l'écart $\delta$ entre le pixel de l'image d'entrée et celui de l'image de référence, et le coefficient de transparence des pixels situés hors de la zone de bordure d'image étant fixés de façon à obtenir une opacité maximum.

2. Méthode selon la revendication 1, **caractérisée en**

**ce que** l'image de référence utilisée pour la comparaison avec une image d'entrée courante est obtenue en remplaçant, dans la zone de bordure d'image de l'image d'entrée précédente, les pixels présentant un écart supérieur audit premier seuil par rapport aux mêmes pixels d'une image de référence précédente utilisée pour la comparaison avec l'image d'entrée précédente, par les mêmes pixels de l'image de référence précédente.

3. Méthode selon la revendication 1 ou 2, **caractérisée en ce que** la production du premier masque comporte une étape d'obtention d'un masque binaire dont les coefficients de transparence ont une valeur binaire, et une étape de filtrage passe-bas du masque binaire pour obtenir un masque non-binaire dont les coefficients de transparence $\alpha$ ont une valeur non-binaire.

4. Méthode selon la revendication 1 ou 2, **caractérisée en ce que** les coefficients de transparence dans la zone de bordure d'images sont fixés de façon à obtenir : une transparence maximum lorsque l'écart $\delta$ est supérieur audit premier seuil $\sigma_1$, une opacité maximum lorsque l'écart $\delta$ est inférieur à un second seuil $\sigma_2$, et une transparence partielle lorsque l'écart $\delta$ est compris entre lesdits premier et second seuils $\sigma_1$ et $\sigma_2$.

5. Méthode selon la revendication 4, **caractérisée en ce que**, lorsque l'écart $\delta$ est compris entre lesdits premier et second seuils $\sigma_1$ et $\sigma_2$, le coefficient de transparence $\alpha$ est une fonction du rapport de la différence entre l'écart $\delta$ et le second seuil $\sigma_2$ et de la différence entre le premier seuil $\sigma_1$ et le second seuil $\sigma_2$.

6. Méthode selon l'une des revendications 1 à 5, **caractérisé en ce que** la production du premier masque comporte une étape de filtrage de masque par un filtre morphologique et/ou par un filtre médian.

7. Méthode selon l'une des revendications 1 à 6, caractérisée en qu'elle comporte une étape de détection, dans les images d'entrée, de personnes non autorisées dans un champ de vue de la visioconférence.

8. Méthode selon la revendication 7, caractérisée en qu'elle comporte une étape de production d'un second masque destiné à être appliqué à l'image de remplacement, ledit second masque affectant un coefficient de transparence maximum aux pixels qui correspondent aux personnes non autorisées.

9. Méthode selon la revendication 8, caractérisée en que le second masque est combiné au premier masque pour obtenir l'image de sortie.

10. Méthode selon l'une des revendications 7 à 9, **caractérisée en ce que** la détection d'une personne non autorisée déclenche le remplacement de l'image de sortie par une image fixe.

11. Méthode selon l'une des revendications 7 à 10, **caractérisée en ce que** ladite opération comporte un filtrage par région pour modifier le premier masque afin de rendre visible des objets de l'image d'entrée qui présentent au moins une des caractéristiques suivantes : objet de grande taille et/ou objet qui s'étend hors de la zone de bordure d'image et/ou objet qui ne touche pas le bord de l'image.

12. Dispositif de visioconférence comportant des moyens pour l'exécution de la méthode de traitement d'image selon l'une des revendications 1 à 11.

13. Décodeur de télévision comportant un dispositif de visioconférence selon la revendication 12.

14. Produit programme d'ordinateur comportant des instructions qui lorsqu'elles sont exécutées par au moins un processeur causent l'exécution de la méthode de traitement d'images selon l'une des revendications 1 à 11 par ledit au moins un processeur.

15. Support de stockage non transitoire comportant des instructions qui lorsqu'elles sont exécutées par au moins un processeur causent l'exécution de la méthode de traitement d'images selon l'une des revendications 1 à 11 par ledit au moins un processeur.

**Patentansprüche**

1. Verfahren zur Bildverarbeitung für Videokonferenzen, umfassend einen Schritt der Analyse einer Sequenz von Eingangsbildern, die von einer Kamera erhalten werden, wobei die Eingangsbilder aus einer Vielzahl von Pixeln zusammengesetzt sind und umfassend einen Bildrandbereich und einen mittleren Bereich, **dadurch gekennzeichnet, dass** der Schritt der Analyse umfasst:

   - einen Vergleich, in dem Bildrandbereich unter Ausschluss des mittleren Bereichs, der Pixel jedes Bilds der Sequenz von Eingangsbildern mit denselben Pixeln eines Referenzbilds, wobei das Referenzbild, das für den Vergleich mit einem aktuellen Eingabebild verwendet wird, aus einem oder mehreren vorhergehenden Eingangsbildern der Sequenz von Eingangsbildern erhalten wird, und
   - einen Vorgang, der darauf gerichtet ist, die Pixel, die in dem Bildrandbereich des Eingangsbilds gelegen sind, zu maskieren, wenn die Pixel im Verhältnis zu denselben Pixeln des Refe-

renzbilds eine Abweichung $\delta$ aufweisen, die größer als eine erste Schwelle $\sigma_1$ ist;

der Vorgang umfassend eine Erzeugung einer ersten Maske, die dafür vorgesehen ist, auf ein Ersatzbild angewendet zu werden, das zum Umwandeln des Eingangsbilds in ein Ausgangsbild verwendet wird, wobei die erste Maske jedem Pixel einen Transparenzkoeffizienten $\alpha$ zuweist, wobei der Transparenzkoeffizient der Pixel, die in dem Bildrandbereich gelegen sind, eine Funktion der Abweichung $\delta$ zwischen dem Pixel des Eingangsbildes und dem des Referenzbildes ist, und der Transparenzkoeffizient der Pixel, die außerhalb des Bildrandbereichs gelegen sind, festgelegt wird, um eine maximale Opazität zu erhalten.

2. Verfahren nach Anspruch 1, **dadurch gekennzeichnet, dass** das Referenzbild, das für den Vergleich mit einem aktuellen Eingangsbild verwendet wird, durch Ersetzen, in dem Bildrandbereich des vorhergehenden Eingangsbilds, der Pixel, die eine Abweichung aufweisen, die größer als die erste Schwelle bezüglich derselben Pixel eines vorhergehenden Referenzbilds ist, das zum Vergleich mit dem vorhergehenden Eingangsbild verwendet wird, durch dieselben Pixel des vorhergehenden Referenzbilds, erhalten wird.

3. Verfahren nach Anspruch 1 oder 2, **dadurch gekennzeichnet, dass** die Erzeugung der ersten Maske einen Schritt des Erhaltens einer binären Maske, deren Transparenzkoeffizienten einen binären Wert vorweisen, und einen Schritt des Tiefpassfilters der binären Maske zum Erhalten einer nicht-binäre Maske, deren Transparenzkoeffizienten $\alpha$ einen nichtbinären Wert vorweisen, umfasst.

4. Verfahren nach Anspruch 1 oder 2, **dadurch gekennzeichnet, dass** die Transparenzkoeffizienten in dem Bildrandbereich festgelegt werden, um Folgendes zu erhalten:

eine maximale Transparenz wenn die Abweichung $\delta$ größer als die erste Schwelle $\sigma_1$ ist, eine maximale Opazität wenn die Abweichung $\delta$ kleiner als eine zweite Schwelle $\sigma_2$ ist, und eine teilweise Transparenz, wenn die Abweichung $\delta$ zwischen der ersten und der zweiten Schwelle $\sigma_1$ und $\sigma_2$. liegt.

5. Verfahren nach Anspruch 4, **dadurch gekennzeichnet, dass,** wenn die Abweichung $\delta$ zwischen der ersten und der zweiten Schwelle $\sigma_1$ und $\sigma_2$, liegt, der Transparenzkoeffizient $\alpha$ eine Funktion des Verhältnisses der Differenz zwischen der Abweichung $\delta$ und der zweiten Schwelle $\sigma_2$ und der Differenz zwischen der ersten Schwelle $\sigma_1$ und der zweiten Schwelle $\sigma_2$ ist.

6. Verfahren nach einem der Ansprüche 1 bis 5, **dadurch gekennzeichnet, dass** die Erzeugung der ersten Maske einen Schritt der Maskenfilterung durch einen morphologischen Filter und/oder durch einen Medianfilter umfasst.

7. Verfahren nach einem der Ansprüche 1 bis 6, **dadurch gekennzeichnet, dass** es einen Schritt der Erkennung, in den Eingangsbildern, von nicht autorisierten Personen in einem Sichtfeld der Videokonferenz umfasst.

8. Verfahren nach Anspruch 7, **dadurch gekennzeichnet, dass** es einen Schritt zur Erzeugung einer zweiten Maske umfasst, die dafür vorgesehen ist, auf das Ersatzbild angewendet zu werden, wobei die zweite Maske den Pixeln, die den nicht autorisierten Personen entsprechen, einen maximalen Transparenzkoeffizienten zuweist.

9. Verfahren nach Anspruch 8, **dadurch gekennzeichnet, dass** die zweite Maske mit der ersten Maske zum Erhalten eines Ausgangsbilds kombiniert wird.

10. Verfahren nach einem der Ansprüche 7 bis 9, **dadurch gekennzeichnet, dass** die Erkennung einer nicht autorisierten Person das Ersetzen des Ausgangsbilds durch ein Standbild auslöst.

11. Verfahren nach einem der Ansprüche 7 bis 10, **dadurch gekennzeichnet, dass** der Vorgang eine Filterung nach Regionen zum Modifizieren der ersten Maske umfasst, um Objekte des Eingangsbilds sichtbar zu machen, die mindestens eine der folgenden Eigenschaften aufweisen: ein großes Objekt und/oder ein Objekt, das sich außerhalb des Bildrandbereichs erstreckt und/oder ein Objekt, das den Bildrand nicht berührt.

12. Videokonferenzvorrichtung, umfassend Mittel zur Ausführung des Bildverarbeitungsverfahrens nach einem der Ansprüche 1 bis 11.

13. Fernsehdecoder, umfassend eine Videokonferenzvorrichtung nach Anspruch 12.

14. Computerprogrammprodukt, umfassend Anweisungen, die, wenn sie durch mindestens einen Prozessor ausgeführt werden, die Ausführung des Bildverarbeitungsverfahrens nach einem der Ansprüche 1 bis 11 durch den mindestens einen Prozessor veranlassen.

15. Nichttransitorischer Speicherträger, umfassend Anweisungen, die, wenn sie durch mindestens einen Prozessor ausgeführt werden, die Ausführung des Bildverarbeitungsverfahrens nach einem der Ansprüche 1 bis 11 durch den mindestens einen Prozessor veranlassen.

## Claims

1. An image processing method for videoconferencing, comprising a step of analyzing a sequence of input images obtained from a camera, the input images being composed of a plurality of pixels and comprising an image border area and a central area, **characterized in that** the analysis step includes:

   - a comparison, on the image border area excluding the central area, of the pixels of each image of the input image sequence with the same pixels of a reference image, the reference image used for the comparison with a current input image being obtained from one or more previous input images of the input image sequence, and
   - an operation aimed at masking the pixels located in the image border area of the input image when said pixels exhibit, with respect to the same pixels of the reference image, a deviation $\delta$ greater than a first threshold $\sigma_1$;
   said operation comprising producing a first mask to be applied to a replacement image used to transform the input image into an output image, said first mask assigning a transparency coefficient $\alpha$ to each pixel, the transparency coefficient of the pixels located in the image border area being a function of the deviation $\delta$ between the pixel of the input image and that of the reference image, and the transparency coefficient of the pixels located outside the image border area being set so as to obtain maximum opacity.

2. The method according to claim 1, **characterized in that** the reference image used for comparison with a current input image is obtained by replacing, in the image border area of the previous input image, pixels which exhibit a deviation greater than said first threshold with respect to the same pixels of a previous reference image used for comparison with the previous input image, with the same pixels of the previous reference image.

3. The method according to claim 1 or claim 2, **characterized in that** producing the first mask involves a step of obtaining a binary mask, the transparency coefficients of which have a binary value, and a step of low-pass filtering the binary mask to obtain a non-binary mask, the transparency coefficients $\alpha$ of which have a non-binary value.

4. The method according to claim 1 or claim 2, **characterized in that** the transparency coefficients in the image border area are set so as to obtain: maximum transparency when the deviation $\delta$ is greater than said first threshold $\sigma_1$, maximum opacity when the deviation $\delta$ is less than a second threshold $\sigma_2$, and partial transparency when the deviation $\delta$ is between said first and second thresholds $\sigma_1$ and $\sigma_2$.

5. The method according to claim 4, **characterized in that,** when the deviation $\delta$ is between said first and second thresholds $\sigma_1$ and $\sigma_2$, the transparency coefficient $\alpha$ is a function of the ratio of the difference between the deviation $\delta$ and the second threshold $\sigma_2$ and of the difference between the first threshold $\sigma_1$ and the second threshold $\sigma_2$.

6. The method according to one of claims 1 to 5, **characterized in that** producing the first mask comprises a mask filtering step using a morphological filter and/or a median filter.

7. The method according to one of claims 1 to 6, **characterized in that** it includes a step of detecting, in the input images, unauthorized persons in a field of view of the videoconference.

8. The method according to claim 7, **characterized in that** it includes a step of producing a second mask to be applied to the replacement image, said second mask assigning a maximum transparency coefficient to the pixels corresponding to the unauthorized persons.

9. The method according to claim 8, **characterized in that** the second mask is combined with the first mask to obtain the output image.

10. The method according to one of claims 7 to 9, **characterized in that** detection of an unauthorized person triggers replacement of the output image by a still image.

11. The method according to one of claims 7 to 10, **characterized in that** said operation includes region filtering to modify the first mask in order to make visible objects in the input image that have at least one of the following characteristics: object of large size and/or object that extends outside the image border area and/or object that does not touch the edge of the image.

12. A videoconferencing device comprising means for executing the image processing method according to one of claims 1 to 11.

13. A TV set-top box comprising a videoconferencing device according to claim 12.

**14.** A computer program product comprising instructions which, when executed by at least one processor, cause the image processing method according to one of claims 1 to 11 to be executed by said at least one processor.

**15.** A non-transitory storage medium comprising instructions which, when executed by at least one processor, cause the image processing method according to one of claims 1 to 11 to be executed by said at least one processor.

[Fig. 1]

[Fig. 2]

EP 4 576 760 B1

[Fig. 3]

301 : séquence d'images d'entrée $I_k$

302 : analyse de $I_k$ par comparaison avec une image de référence

k++

303 : opération sur $I_k$ visant à remplacer les pixels présentant un écart $\delta > \sigma_1$ par rapport à l'image de référence

$O_k$ ou $M1_k$

[Fig. 4]

401 : $F_1 = I_1$

402 : comparaison des pixels de $I_k$ et de $F_{k-1}$

k++

403 : obtention de $F_k$ par remplacement des pixels de $I_k$ pour lesquels $\delta > \sigma_1$ par ceux de Fk-1

[Fig. 5]

301 : séquence d'images d'entrée $I_k$

302 : analyse de $I_k$

501 : détection de personnes
non-autorisées dans $I_k$

303 : production du
premier masque $M1_k$

503 : combinaison
des masques et
production de $O_k$

502 : production du second
masque $M2_k$

$M1_k$

$M2_k$

$O_k$

[Fig. 6]

601 : étiquetage des composantes
connexes

602 : détermination des
composantes connexes qui répondent
au(x) critère(s) de non-masquage

603 : modification du masque

$M1_k$

[Fig. 7A]

[Fig. 7B]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.-P. COCQUEREZ** ; **S. PHILIPP**. Analyse d'images : filtrage et segmentation. 1995, 61-63